# EUROPÄISCHE PATENTSCHRIFT

(11) **EP 2 941 366 B1**
(45) Veröffentlichungstag und Bekanntmachung des Hinweises auf die Patenterteilung: **20.02.2019**
(21) Anmeldenummer: 13811967.2
(22) Anmeldetag: 20.12.2013
(51) Int. Cl.: B60N 2/70

(54) **SCHAUMTEIL, INSBESONDERE FÜR EINEN FAHRZEUGSITZ, SOWIE VERFAHREN UND WERKZEUG ZUR HERSTELLUNG EINES SCHAUMTEILS**
FOAM PART, IN PARTICULAR FOR A VEHICLE SEAT, AND METHOD AND TOOL FOR PRODUCING A FOAM PART
PIECE DE MOUSSE, EN PARTICULIER POUR UN SIEGE DE VEHICULE ET PROCEDE ET OUTIL POUR PRODUIRE UN PIECE DE MOUSSE

(30) Priorität: 04.01.2013 DE 102013000244; 15.02.2013 DE 102013002826; 22.05.2013 DE 102013209465
(43) Veröffentlichungstag der Anmeldung: 11.11.2015
(73) Patentinhaber: Adient Luxembourg Holding S.à r.l., 1855 Luxembourg (LU)
(72) Erfinder: HUGUES, Laurent, F-67120 Soultz les Bains (FR); HILGER, Karsten, 53797 Lohmar-Honrath (DE); RIEZLER, Bernhard, A-5541 Altenmarkt (AT); STEINMEIER, Horst, 32312 Lübbecke (DE); BENAMAR, Mohsin, 51766 Engelskirchen (DE)
(74) Vertreter: Liedhegener, Ralf
(86) Internationale Anmeldenummer: PCT/EP2013/077630
(87) Internationale Veröffentlichungsnummer: WO 2014/106592

(56) Entgegenhaltungen:
- WO-A2-2010/034424
- DE-A1- 1 953 004
- DE-A1-102009 011 736
- DE-U1- 20 014 059
- JP-A- 2007 084 039
- US-A- 3 770 318

## Beschreibung

Die Erfindung betrifft ein Schaumteil mit den Merkmalen des Oberbegriffs des Anspruches 1.

### Stand der Technik

Durch Benutzung sind Schaumteile für Fahrzeugsitze bekannt, die einem Polstern der Sitzstruktur dienen und dem Benutzer des Fahrzeugsitzes einen möglichst guten Sitzkomfort bieten sollen. Meist umfasst die Sitzpolsterung ein Schaumteil für das Sitzkissen und ein davon separates Schaumteil für die Sitzlehne. Jedes der beiden Schaumteile weist einen Mittelbereich und zwei Seitenwangen auf. Bei einem Schaumteil für das Sitzkissen stützt der Mittelbereich des Schaumteils das Gesäß und die Oberschenkelrückseiten des Insassen des Fahrzeugsitzes nach unten ab, während die beiden Seitenwangen seitlich an jeweils einem Oberschenkel anliegen und dadurch Querkräfte auf den Insassen, insbesondere während einer Kurvenfahrt, aufnehmen können. Bei einem Schaumteil für die Lehne stützt der Mittelbereich des Schaumteils den Rücken des Insassen nach hinten ab, während die beiden Seitenwangen seitlich an dem Rücken anliegen und dadurch Querkräfte auf den Insassen aufnehmen können.

Die EP 1 068 094 B1 offenbart ein Schaumteil mit mehreren an einem Grundkörper des Schaumteils angeformten, einander benachbarten, und sich im Wesentlichen senkrecht zur Sitzfläche von dem Grundkörper weg nach oben erstreckenden Röhrenabschnitten zur Komfortsteigerung. Während des Einsitzens des Insassen werden zunächst die Röhrenabschnitte komprimiert, während der Grundkörper nur unwesentlich verformt wird. Erst nach deutlicher Verformung der Röhrenabschnitte wird der Grundkörper stärker komprimiert. Dadurch wird ein zweistufiges Einsitzverhalten mit steigender Polsterhärte erreicht.

Die US 3 770 318 A offenbart ein Schaumteil für einen Fahrzeugsitz mit einem einem Benutzer zugewandten Schaumteil, wobei das Schaumteil mehrere dem Benutzer zugewandte Komfortröhren aufweist. Sämtliche Komfortröhren sind geschlossen und somit luftundurchlässig.

Aus dem Stand der Technik sind Zweizonenschäume bekannt, bei denen durch Verwendung unterschiedlicher Schaumwerkstoffe der Mittelbereich weicher ausgebildet ist als die Seitenwangen. Dadurch soll zum einen der Sitzkomfort erhöht und zum anderen die Seitenabstützung für den Benutzer verbessert werden. Dazu werden oftmals Schnittschaumauflagen im Mittelbereich und Hartschaumeinleger in den Seitenwangen verwendet. Zur Vermeidung eines Durchtauchens des Benutzers unter dem Beckengurt im Crashfall wird häufig eine Anti-Submarining-Funktion durch ein zusätzliches Bauteil aus einem Partikelschaumwerkstoff, beispielsweise EPP (Expandiertes Polypropylen), bereitgestellt. Die genannten zusätzlichen Bauteile erhöhen die Kosten und reduzieren die Dauerhaltbarkeit der Schaumteile. Zudem sind nur begrenzt dünne Schaumdicken möglich.

Aus der WO 01/74557 A1 ist ein Schaumteil bekannt, mit einem ersten Bereich aus Schaum einer ersten Zusammensetzung und einem zweiten Bereich aus Schaum einer zweiten Zusammensetzung, wobei zwischen dem ersten und dem zweiten Bereich ein Netzwerk aus Polyethylen, Jute, Gaze Vlies oder dergleichen angeordnet ist. Dieses Schaumteil erfüllt jedoch nicht höchste Komfortansprüche während des Einsitzens, insbesondere dann nicht, wenn während des Einsitzens zunächst eine sehr weiche Polsterschicht erwünscht ist. Ein vergleichbarer Polsteraufbau ist auch aus der WO 2010/102785 A2 bekannt. Schaumteile mit mehreren Schaumlagen sind zudem aus der WO 2010/034424 A2, der

DE 1 953 004, der DE 200 14 059 U1, der DE 10 2009 011 736 A1 und der JP 2007 084039 A bekannt.

Eine Kombination aus Röhrenabschnitten, wie diese aus der EP 1 068 094 B1 bekannt sind, und einer horizontalen Trennebene zwischen einem ersten Bereich des Schaumteils mit einer ersten Zusammensetzung und einem zweiten Bereich des Schaumteils mit einer zweiten Zusammensetzung, wie aus der WO 01/74557 A1 bekannt, gilt als nicht herstellbar. Das Vermeiden von qualitätsmindernden Lufteinschlüssen gilt als unlösbar. Ebenso wird ein Zerreißen des Schaumteiles im Bereich der Trennebene während des Entformens der Röhren vermutet, insbesondere wenn die Röhren für Zwecke der Sitzklimatisierung durchgehend hohl sind und ein Trennvlies in der Trennebene entsprechend gelocht sein muss.

### Aufgabe

Der Erfindung liegt die Aufgabe zu Grunde, ein Schaumteil der eingangs genannten Art zu verbessern, insbesondere den Komfort zu steigern und die Fertigungskosten durch eine Reduzierung der Bauteile zu senken sowie ein Verfahren und ein Werkzeug zur Herstellung eines solchen Schaumteils bereitzustellen.

### Lösung

Diese Aufgabe wird erfindungsgemäß durch ein Schaumteil mit den Merkmalen des Anspruches 1 gelöst.

Dadurch, dass die erste Schaumlage eine gegenüber der zweiten Schaumlage unterschiedliche Härte und/oder Dichte aufweist und mehrere dem Benutzer zugewandte Komfortröhren vorgesehen sind, kann der Komfort verbessert werden. Eine Hysterese beim Ein- und Ausfedern des Schaumteils und eine Schwingungsdämpfung kann besser an Kundenwünsche angepasst werden. Zusätzliche Schnittschaumauflagen und Hartschaumeinleger in den Seitenwangen sowie die dazu teilweise notwendigen Klebeprozesse können entfallen. Dadurch wird zudem eine exzellente Dauerhaltbarkeit erreicht. Es sind reduzierte Schaumdicken und dadurch reduzierte Schaumteilgewichte möglich. Ein zusätzliches EPP-Bauteil für die Gewährleistung einer Anti-Submarining-Funktion kann entfallen.

Unter dem Begriff Komfortröhre ist ein erhöhter, dem Insassen zugewandter Schaumteilbereich zu verstehen, der unterschiedlichste Geometrie haben kann. Die Komfortröhren bilden in dem Insassen zugewandten Polsterbereichen freistehende Erhöhungen gegenüber einem Grundkörper des Schaumteils.

Die Komfortröhren können innen hohl ausgebildet sein, beispielsweise zu Zwecken der Sitzklimatisierung, oder aus Vollmaterial bestehen. Im Falle von innen hohl ausgebildeten Komfortröhren gehen zylinderförmige Löcher durch die Komfortröhren und einen die Komfortröhren tragenden Grundkörper des Schaumteils. Dabei kann eine Komfortröhre ein oder zwei zueinander versetzte, parallel verlaufende Löcher aufweisen.

Die Löcher können vollständig durch das Schaumteil verlaufen, so dass Luft von der Unterseite des Schaumteils durch die Löcher zur Oberseite des Schaumteils strömen kann. Alternativ ist zumindest ein Loch als Sackloch ausgebildet, das nicht vollständig durch das Schaumteil verläuft, sondern beispielsweise nur durch den Bereich der zugehörigen Komfortröhre.

Vorzugsweise sind die Löcher zylinderförmig, insbesondere kreiszylinderförmig ausgebildet. Dadurch lassen sich die Löcher mit einfachen Mitteln herstellen.

Die Nachgiebigkeit einer einzelnen Komfortröhre lässt sich auch durch das Vorsehen mehrerer Löcher gezielt beeinflussen. Vorzugsweise sind Komfortröhren mit mehreren Löchern im Bereich der Sitzmitte, senkrecht zur Fahrtrichtung gesehen, angeordnet.

Bei der Auslegung von Schaumteilen stellen eine Optimierung des Sitzkomforts im Hinblick auf die Schaumteilhärte und eine Optimierung der Sitzbelüftung oftmals sich widersprechende Ziele dar. Dieser Zielkonflikt lässt sich vermeiden, indem einzelne Löcher der Komfortröhren als Sacklöcher ausgebildet sind, das heißt nicht vollständig durch das Schaumteil hindurch verlaufen. Die Sacklöcher bieten zwar keine Luftzirkulation durch das Schaumteil hindurch, jedoch weist eine Komfortröhre mit Sackloch im Vergleich zu einer Komfortröhre mit durchgehendem Loch eine geringere Nachgiebigkeit auf.

Die Außenkonturen der Querschnitte der Komfortröhren können grundsätzlich alle bekannten Querschnitte von festen Körpern aufweisen und können insbesondere rund, polygon, wabenförmig oder wie in der EP 1 068 094 B1 beschrieben, ausgeführt sein. Die Außenkonturen der Komfortröhren sind unabhängig von den Querschnitten der Löcher, so dass beispielsweise eine quadratische Komfortröhre ein ovales Loch aufweisen kann.

Ein in einschlägigen Fachkreisen allgemein verbreitetes Vorurteil, dass eine Kombination aus Komfortröhren und einem aus zwei Schaumlagen bestehenden Schaumteil nicht herstellbar ist, wurde überwunden.

Eine genaue Trennung der Schaumteilbereiche zwischen der ersten Schaumlage und der zweiten Schaumlage lässt sich durch ein flächiges Netzwerk zwischen den Schaumlagen erreichen, insbesondere ein Netzwerk aus Polyethylen, Jute, Gaze oder Vlies. Idealerweise ist das Netzwerk während des Schäumverfahrens in geringem Umfang durchlässig für den Schaumwerkstoff, wodurch eine feste Verbindung zwischen den Schaumlagen und dem Netzwerk entsteht. Unter dem Begriff Netzwerk sind auch alle an sich bekannten textilen Stoffe, Gewebe, Gewirke und Vliese zu verstehen.

Das Netzwerk eines komfortabel ausgelegten Schaumteils liegt vorzugsweise zwischen der ersten Schaumlage und der zweiten Schaumlage in einer annähernd horizontalen Ebene des Schaumteils. Der Begriff horizontal bedeutet dabei nicht die mathematisch exakt horizontale Lage innerhalb eines Fahrzeuges, sondern alle Ebenen, die annähernd parallel zu der dem Sitzinsassen zugewandten Oberfläche des jeweiligen Schaumteils sind. Sitzlehnenpolster können somit eine horizontale Ebene haben, die im Fahrzeug sogar annähernd vertikal ausgerichtet sein kann. Im Werkzeug liegt die horizontale Ebene jedoch zumeist annähernd horizontal. Die horizontale Ebene muss dabei nicht mathematisch eben, also zweidimensional sein, sondern kann auch eine leicht dreidimensionale Gestalt mit Wölbungen und leichten Erhöhungen und Vertiefungen aufweisen.

Wenn das Netzwerk in einem Bereich der untersten Punkte von Vertiefungen zwischen mindestens zwei Komfortröhren angeordnet ist, werden beim Einsitzen des Insassen zunächst im Wesentlichen die Komfortröhren komprimiert. Im weiteren Verlauf des Einsitzens wird auch die zweite Schaumlage deutlich komprimiert. Dadurch wird ein zweistufiges Einsitzverhalten mit steigender Polsterhärte erreicht.

Ein dreistufiges Einsitzverhalten mit steigender Polsterhärte wird erreicht, indem das Netzwerk in einem Bereich deutlich unterhalb der Vertiefungen zwischen den mindestens zwei Komfortröhren angeordnet ist. Die Trennebene zwischen den beiden Schaumlagen liegt im Vergleich zur zuvor beschriebenen Variante mit zweistufigem Einsitzverhalten tiefer, das heißt weiter vom Insassen entfernt. Während des Einsitzens des Insassen werden dadurch zunächst im Wesentlichen die Komfortröhren komprimiert. Im weiteren Verlauf des Einsitzens wird im Wesentlichen die unterhalb der Komfortröhren angeordnete Schicht der ersten Schaumlage komprimiert, zunächst ohne die zweite Schaumlage deutlich zu komprimieren. Letztlich wird dann auch die zweite Schaumlage deutlich komprimiert.

Ein dreistufiges Einsitzverhalten kann alternativ auch dadurch erreicht werden, dass das Netzwerk in einem Bereich oberhalb der untersten Punkte der Vertiefungen zwischen mindestens zwei Komfortröhren angeordnet ist.

Eine bevorzugte Bezugsbefestigung an ein erfindungsgemäßes Schaumteil sieht vor, dass zwischen einzelnen Feldern von Komfortröhren Polsterbefestigungskanäle vorgesehen sind, durch die hindurch der Bezug, vorzugsweise über Clipse, Drähte oder Haken, an Befestigungsmittel im Schaumteil befestigbar ist. Solche Befestigungsmittel können an sich bekannte eingeschäumte Metalldrähte sein.

Eine homogene Sitzdruckverteilung wird erreicht, wenn die Komfortröhren einzelner zueinander spiegelsymmetrisch angeordneter Felder zueinander spiegelbildlich angeordnet sind. Besonders bevorzugt ist dabei eine Spiegelebene, durch einen Polsterbefestigungskanal, der in Fahrtrichtung und in der Sitzmitte verläuft.

Ein Schaumteil bietet einen besonders guten Seitenhalt für einen Sitzinsassen, indem das Schaumteil eine dritte Schaumlage aufweist, die eine gegenüber der Härte und/oder Dichte der beiden anderen Schaumlagen größere Härte und/oder Dichte aufweist, insbesondere im Bereich einer Seitenwange des Schaumteils).

Ein Verfahren zur Herstellung eines erfindungsgemäßen Schaumteils sieht vor, dass in einem ersten Schritt die erste Schaumlage mit den Komfortröhren geschäumt wird und in einem zweiten Schritt die zweite Schaumlage geschäumt wird.

Ein bevorzugtes Werkzeug zur Herstellung eines erfindungsgemäßen Schaumteils umfasst ein Unterteil, einen Rahmen, insbesondere zum Aufspannen eines als Vlies ausgebildeten Netzwerkes und ein Oberteil.

Das erfindungsgemäße Schaumteil lässt sich ohne qualitätsmindernde Lufteinschlüsse herstellen und einfach entformen, insbesondere wenn das erfindungsgemäße Verfahren und das erfindungsgemäße Werkzeug zur Herstellung des erfindungsgemäßen Schaumteils verwendet werden.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine Draufsicht auf ein als Sitzkissen-Schaumteil ausgeführtes erstes Ausführungsbeispiel,
- Fig. 2:: eine Seitenansicht des ersten Ausführungsbeispiels,
- Fig. 3:: einen Schnitt durch das erste Ausführungsbeispiel entlang der Linie A - A in Figur 1,
- Fig. 4:: einen Fig. 3 entsprechenden Schnitt durch eine erste Abwandlung des ersten Ausführungsbeispiels,
- Fig. 5:: einen Fig. 3 entsprechenden Schnitt durch eine zweite Abwandlung des ersten Ausführungsbeispiels,
- Fig. 6:: eine Vorderansicht eines als Sitzlehnen-Schaumteil ausgeführten zweiten Ausführungsbeispiels,

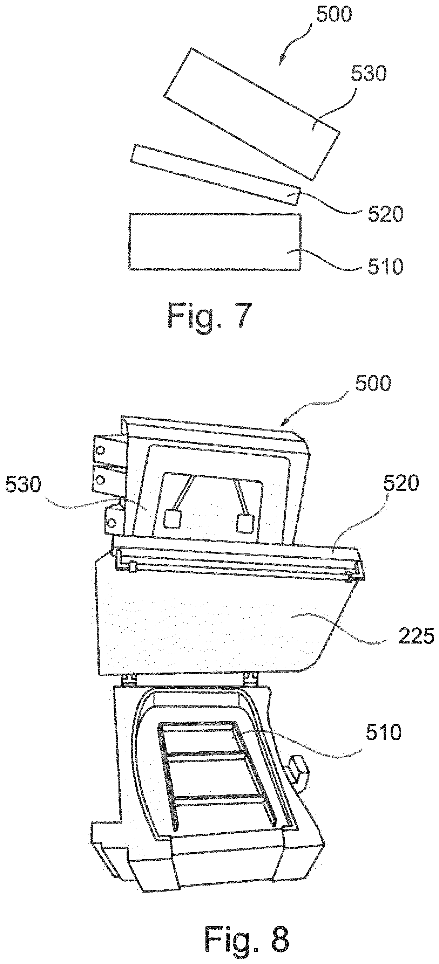

- Fig. 7:: eine Prinzipdarstellung eines erfindungsgemäßen Werkzeugs,
- Fig. 8:: eine schematische und perspektivische Darstellung des Werkzeugs aus Fig. 7,
- Fig. 9:: eine perspektivische Ansicht eines als Sitzkissen-Schaumteil ausgeführten dritten Ausführungsbeispiels,
- Fig. 10:: eine Draufsicht auf das dritte Ausführungsbeispiel und
- Fig. 11:: eine Draufsicht auf ein viertes Ausführungsbeispiel.

Ein Fahrzeugsitz, insbesondere für ein Kraftfahrzeug, umfasst ein Sitzkissen und eine Lehne.

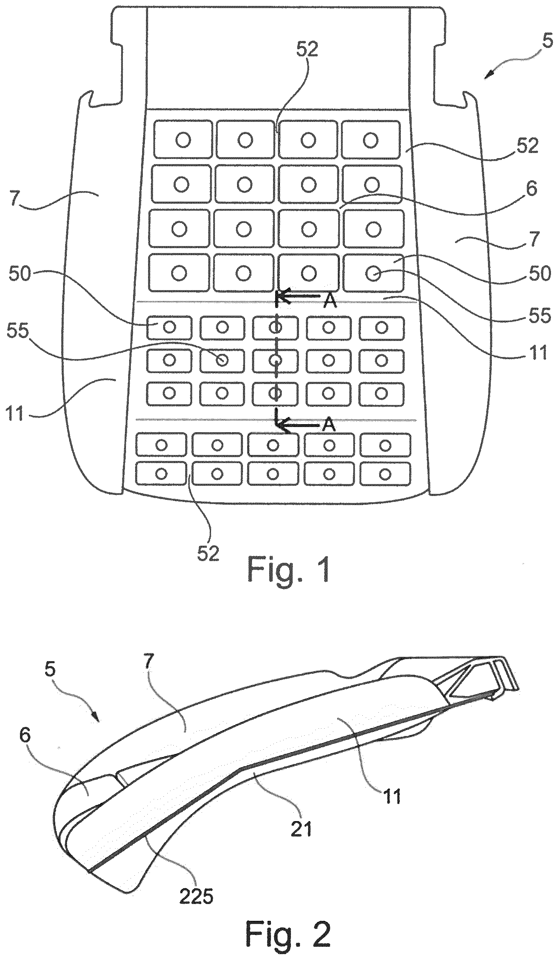

In den Figuren 1 und 2 ist als erstes Ausführungsbeispiel ein erfindungsgemäßes Schaumteil 5 für ein Sitzkissen des Fahrzeugsitzes dargestellt. Das Schaumteil 5 umfasst einen Mittelbereich 6 und zwei Seitenwangen 7.

Eine in Einbaulage des Fahrzeugsitzes annähernd horizontal angeordnete erste Schaumlage 11 ist im Falle der Benutzung des Fahrzeugsitzes dem Benutzer zugewandt, so dass der Benutzer mit dem Gesäß und den Oberschenkelrückseiten, gegebenenfalls unter Zwischenlage weiterer Polsterbestandteile wie insbesondere eines Stoff- oder Lederbezuges, in Teilbereichen mit der ersten Schaumlage 11 in Kontakt ist. Die erste Schaumlage 11 besteht vorzugsweise aus Weichschaum.

In Einbaulage unterhalb der ersten Schaumlage 11 ist eine zweite Schaumlage 21 angeordnet, insbesondere ebenfalls annähernd horizontal ausgerichtet und einteilig mit der ersten Schaumlage 11 verbunden. Die zweite Schaumlage 21 besteht aus einem gegenüber dem Schaummaterial der ersten Schaumlage 11 festeren Schaummaterial, vorzugsweise aus Hartschaum.

In einer Abwandlung des ersten Ausführungsbeispiels bestehen die Seitenwangen 7 aus einem dritten Schaummaterial. Die zweite Schaumlage 21 besteht aus einem gegenüber dem Schaummaterial der ersten Schaumlage 11 härteren Schaummaterial. Das dritte Schaummaterial der Seitenwangen 7 ist nochmals härter als das Schaummaterial der zweiten Schaumlage 21.

Eine Trennebene zwischen der ersten Schaumlage 11 und der zweiten Schaumlage 21 verläuft vorliegend sowohl durch den Mittelbereich 6 als auch durch die beiden Seitenwangen 7. In Abwandlungen des Ausführungsbeispiels können die Seitenwangen 7 jedoch auch vollständig aus der zweiten Schaumlage 21 oder aus einem dritten Schaumwerkstoff bestehen. In diesem Fall weist dann nur der Mittelbereich 6 einen Zweizonenschaum auf.

Die beiden Schaumlagen 11, 21 sind in einem Werkzeug geschäumt und weisen zueinander unterschiedliche Härten und Dichten auf. Die beiden Schaumlagen 11 und 21 sind aus Polyurethan und insbesondere im MDI-(Diphenylmethandiisocyanat-) oder TDI- (Toluylendiisocyanat-) Schäumverfahren oder einem Mischverfahren hergestellt. Die Schaumhärten liegen vorzugsweise zwischen 4 und 20 kPa, wobei die erste Schaumlage 11 näher an dem unteren Wert und die zweite Schaumlage 21 näher an dem oberen Wert liegt. Die Dichte der Schaumlagen 11, 21 liegt vorzugsweise zwischen 50 g/l und 95 g/l.

Der Mittelbereich 6 der ersten Schaumlage 11 weist zudem mehrere, vorliegend einundvierzig Komfortröhren 50 auf, welche insbesondere mit einem rechteckförmigen Querschnitt ausgestaltet sind und den Komfort beim ersten Einsitzen und auf kurzen Fahrstrecken erhöhen. Die untere, härtere zweite Schaumlage 21 stärkt hingegen den Langzeitkomfort.

Die Komfortröhren 50 sind einstückig mit der ersten Schaumlage 11 verbunden und bilden die dem Sitzinsassen am nächsten zugewandten Abschnitte des Mittelbereichs 6 des Schaumteils 5. Die Komfortröhren 50 sind im Wesentlichen senkrecht zur Sitzfläche angeordnet. Die Querschnitte der Komfortröhren 50 sind vorliegend rechteckig mit abgerundeten Kanten, können jedoch auch jede andere geometrische Form aufweisen. Zwischen benachbarten Komfortröhren 50 liegen Vertiefungen 52, deren Tiefe der Höhe der jeweiligen Komfortröhren 50 über einer Grundfläche der ersten Schaumlage 11 entspricht.

Für einen guten Klimakomfort ist in jeder der Komfortröhren 50 ein Loch 55 vorgesehen, das sich vollständig durch das Schaumteil 5 hindurch erstreckt. Es ist auch möglich, gezielt nur einzelne der Komfortröhren 50 mit einem Loch 55 zu versehen. Die durchgehenden Löcher 55 ermöglichen einen effektiven Luft- und Feuchtigkeitsaustausch durch das Schaumteil hindurch, und zwar vorteilhafterweise auch ohne aktive Belüftungsmittel wie Ventilatoren. Es handelt sich also um ein rein passives Klimasystem.

Die Löcher 55 sind vorliegend kreiszylinderförmig ausgebildet und liegen vorzugsweise jeweils zentrisch in der zugehörigen Komfortröhre 50.

Zwischen den beiden Schaumlagen 11 und 21 befindet sich ein als Vlies 225 ausgebildetes Netzwerk, das eine Grenze zwischen den beiden Schaumlagen 11 und 21 darstellt. Die beiden Schaumlagen 11 und 21 sind jeweils stoffschlüssig und/oder formschlüssig mit dem Vlies 225 verbunden.

Das Vlies 225 ist vorzugsweise senkrecht zu den Löchern 55 ausgerichtet. Vorliegend ist das Vlies 225 flächig ohne Löcher ausgebildet, so dass das Vlies 225 durch die Löcher 55 hindurch läuft. Das Vlies 225 kann jedoch auch im Bereich der Löcher 55 gelocht ausgebildet sein.

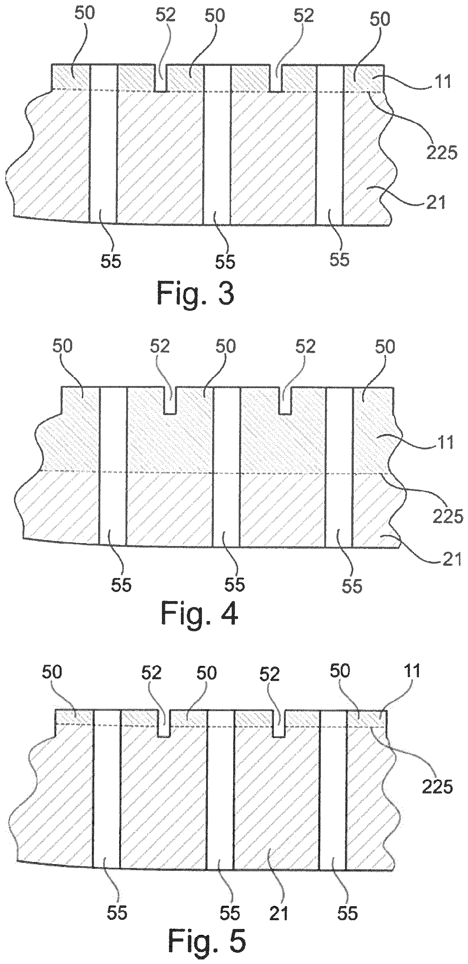

Figur 3 zeigt einen Schnitt durch das Schaumteil 5. Das Vlies 225 schließt unmittelbar an die Vertiefungen 52 zwischen den einzelnen Komfortröhren 50 an, so dass ausschließlich die Komfortröhren 50 die erste Schaumlage 11 bilden. Beim Einsitzen des Insassen werden zunächst im Wesentlichen die Komfortröhren 50 komprimiert. Im weiteren Verlauf des Einsitzens wird auch die zweite Schaumlage 21 deutlich komprimiert. Dadurch wird ein zweistufiges Einsitzverhalten mit steigender Polsterhärte erreicht.

In Figur 4 ist eine erste Abwandlung des ersten Ausführungsbeispiels dargestellt. Das Vlies 225 ist im Vergleich zum ersten Ausführungsbeispiel tiefer angeordnet, so dass die Trennebene zwischen den beiden Schaumlagen 11 und 21 tiefer liegt, das heißt weiter vom Insassen weg liegt. Während des Einsitzens des Insassen werden zunächst im Wesentlichen die Komfortröhren 50 komprimiert. Im weiteren Verlauf des Einsitzens wird im Wesentlichen die unterhalb der Komfortröhren 50 angeordnete Schicht der ersten Schaumlage 11 komprimiert, bis letztlich auch die zweite Schaumlage 21 deutlich komprimiert wird. Dadurch wird ein dreistufiges Einsitzverhalten mit steigender Polsterhärte erreicht.

In Figur 5 ist eine zweite Abwandlung des ersten Ausführungsbeispiels dargestellt. Das Vlies 225 ist im Vergleich zum ersten Ausführungsbeispiel höher angeordnet, so dass die Trennung zwischen den beiden Schaumlagen 11 und 21 innerhalb der Komfortröhren 50 liegt, das heißt näher zum Insassen liegt. Beim Einsitzen des Insassen werden zunächst im Wesentlichen die oberen Bereiche der Komfortröhren 50, die zu der ersten Schaumlage 11 gehören, komprimiert. Im weiteren Verlauf des Einsitzens werden auch die unteren Bereiche der Komfortröhren 50, die zu der zweiten Schaumlage 21 gehören, deutlicher komprimiert und letztlich auch die unterhalb der Komfortröhren gelegenen Bereiche der zweiten Schaumlage 21. Dadurch wird ein dreistufiges Einsitzverhalten mit steigender Polsterhärte erreicht.

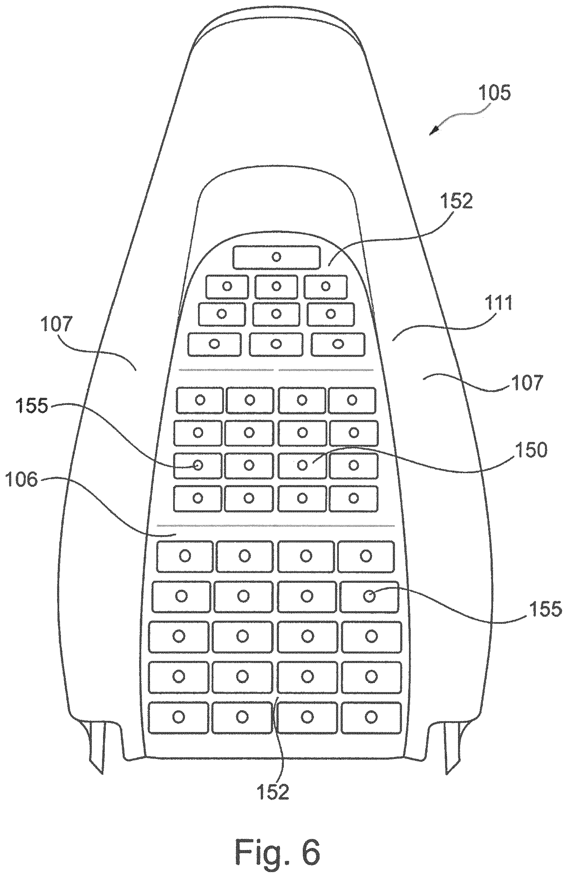

Ein in Fig. 6 dargestelltes zweites Ausführungsbeispiel ist als Schaumteil 105 für eine Sitzlehne ausgeführt. Das Schaumteil 105 umfasst einen Mittelbereich 106 und zwei Seitenwangen 107. Das Schaumteil 5 des ersten Ausführungsbeispiels und das Schaumteil 105 schließen in Einbau- und Nutzlage einen Winkel von beispielsweise annähernd etwa 90 Grad ein. Eine erste Schaumlage 111 des Schaumteils 105 ist im Fahrzeug annähernd vertikal und in Fahrtrichtung nach vorne orientiert, so dass der Benutzer mit dem Rücken, gegebenenfalls unter Zwischenlage weiterer Polsterbestandteile, wie insbesondere eines Stoff- oder Lederbezuges, in Teilbereichen mit der ersten Schaumlage 111 in Kontakt ist.

In Einbaulage hinter der ersten Schaumlage 111 ist eine in der Figur 6 nicht sichtbare zweite Schaumlage angeordnet, insbesondere ebenfalls annähernd vertikal ausgerichtet und insbesondere einteilig mit der ersten Schaumlage 111 verbunden. Die zweite Schaumlage besteht vorzugsweise aus Hartschaum. Die erste Schaumlage 111 und die zweite Schaumlage sind in einem Werkzeug geschäumt und weisen zueinander unterschiedliche Härten und Dichten auf.

Die erste Schaumlage 111 weist zudem mehrere Komfortröhren 150 auf, welche den Komfort beim ersten Einsitzen und auf kurzen Fahrstrecken erhöhen. Die untere, härtere zweite Schaumlage stärkt hingegen den Langzeitkomfort.

Zwischen benachbarten Komfortröhren 150 liegen Vertiefungen 152, deren Tiefe der Höhe der jeweiligen Komfortröhren 150 über einer Grundfläche der ersten Schaumlage 111 entspricht.

Für einen guten Klimakomfort ist in jedem Röhrenabschnitt der Komfortröhren 150 ein Loch 155 vorgesehen, das sich vollständig durch das Schaumteil 105 hindurch erstreckt.

Die erste Schaumlage 111 und die zweite Schaumlage sind vorzugsweise im MDI-(Diphenylmethandiisocyanat-) oder TDI- (Toluylendiisocyanat-) Schäumverfahren hergestellt. Die Schaumhärten liegen in an sich bekannten, typischen Bereichen.

In einer Abwandlung des zweiten Ausführungsbeispiels umfasst das Schaumteil 105 eine erste Schaumlage 111, jedoch keine weitere, insbesondere keine zweite Schaumlage. Dieser Aufbau wird vorzugsweise dann gewählt, wenn eine sehr geringe Schaumdicke des Schaumteils 105 erreicht werden soll oder ein einfacher Werkzeugaufbau realisiert werden soll.

Die Herstellung der erfindungsgemäßen Schaumteile 5 und 105 erfolgt in einem Werkzeug 500. Das Werkzeug 500 umfasst ein schüsselartiges Unterteil 510, einen relativ zum Unterteil 510 schwenkbaren Rahmen 520, der ein Vlies 225 als Zwischeneinleger aufspannt, und einen relativ zum Rahmen 520 verschwenkbares deckelartiges Oberteil 530. Die Werkzeugkonturen zur Herstellung der Komfortröhren 50 und 150 sind im Unterteil 510 vorgesehen, so dass das Schaumteil 5 gegenüber seiner Einbaulage im Fahrzeug kopfüber hergestellt wird.

In einem ersten Schäumvorgang wird in das Unterteil 510 das Material für die erste Schaumlage 11, 111 eingefüllt. Anschließend wird der Rahmen 520 mitsamt dem aufgespannten Vlies 225 auf das Unterteil 510 geschwenkt, so dass das Vlies 225 auf der Oberfläche der zweiten Schaumlage 21, 221 aufliegt. In einem zweiten Schäumvorgang wird das Material für die zweiten Schaumlage 21 in den Raum zwischen dem Rahmen 520 und dem Oberteil 330 eingebracht und das Oberteil 530 anschließend geschlossen.

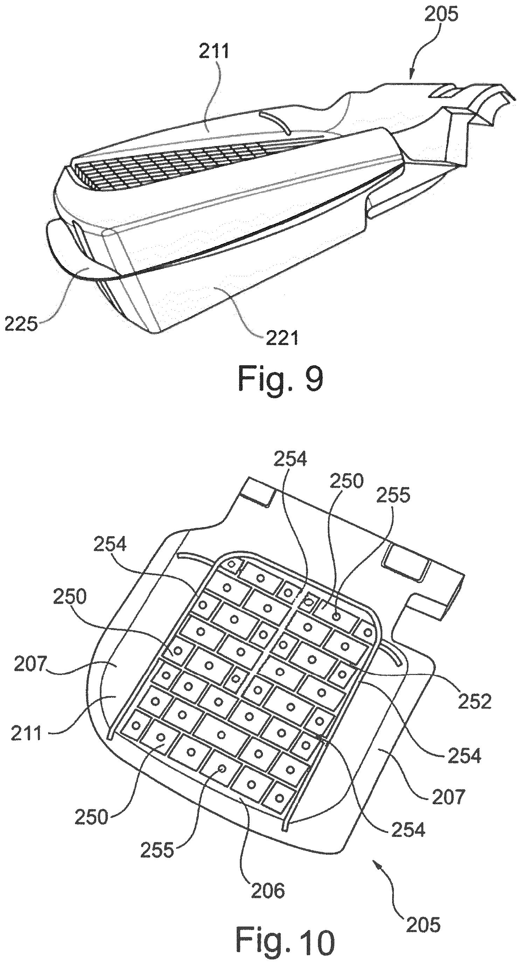

Ein in den Figuren 9 und 10 dargestelltes drittes Ausführungsbeispiel entspricht weitgehend dem ersten Ausführungsbeispiel, soweit es anschließend nicht abweichend beschrieben ist. Gleichwirkende Bauteile und Konturen haben gegenüber dem ersten Ausführungsbeispiel um den Wert 200 höhere Bezugszeichen. Ein Herstellverfahren und ein Werkzeug für das dritte Ausführungsbeispiel entsprechen ebenfalls jeweils weitgehend dem zuvor beschriebenen Herstellverfahren und Werkzeug.

Das dritte Ausführungsbeispiel ist ein Schaumteil 205 für ein Sitzkissen des Fahrzeugsitzes. Das Schaumteil 205 umfasst einen Mittelbereich 206 und zwei Seitenwangen 207.

Eine in Einbaulage des Fahrzeugsitzes annähernd horizontal angeordnete erste Schaumlage 211 ist im Falle der Benutzung des Fahrzeugsitzes dem Benutzer zugewandt. Die erste Schaumlage 211 besteht vorzugsweise aus Weichschaum.

In Einbaulage unterhalb der ersten Schaumlage 211 ist eine zweite Schaumlage 221 angeordnet, insbesondere ebenfalls annähernd horizontal ausgerichtet und einteilig mit der ersten Schaumlage 211 verbunden. Die zweite Schaumlage 221 besteht aus einem gegenüber dem Schaummaterial der ersten Schaumlage 211 festeren Schaummaterial, vorzugsweise aus Hartschaum.

Die beiden Schaumlagen 211 und 221 sind in einem Werkzeug geschäumt und weisen zueinander unterschiedliche Härten und Dichten auf.

Die erste Schaumlage 211 weist zudem mehrere, vorliegend dreiundvierzig Komfortröhren 250 auf, welche einen weitgehend rechteckförmigen Querschnitt haben. Einzelne dieser Komfortröhren 250 haben einen annähernd quadratischen Querschnitt. Zwischen benachbarten Komfortröhren 250 liegen Vertiefungen 252, deren Tiefe der Höhe der jeweiligen Komfortröhren 250 über einer Grundfläche der ersten Schaumlage 211 entspricht.

Die Komfortröhren 250 sind in drei Feldern von unmittelbar benachbarten Komfortröhren 250 aufgeteilt. Die Grenzen der Felder sind durch Polsterbefestigungskanäle 254 gebildet. Die Polsterbefestigungskanäle 254 bieten mehrere Durchgänge für an einem Sitzbezug befestigte erste Befestigungsmittel und mit diesen ersten Befestigungsmitteln zusammenwirkende und im Schaumteil 205 eingebrachte zweite Befestigungsmittel. Die an sich bekannten Befestigungsmittel, wie beispielsweise Drähte und Haken, sind in den Figuren nicht dargestellt.

In einem unter den Oberschenkeln eines Insassen positionierten vorderen Feld von Komfortröhren 250, d.h. im vorderen Bereich des Mittelbereiches 206 des Schaumteils 205 sind vorliegend siebzehn Komfortröhren 250 über die gesamte Breite des Mittelbereiches 206 verteilt. In zwei weiteren, jeweils in einem Bereich unter den Sitzbeinhöckern des Insassen positionierten hinteren Feldern von Komfortröhren 250 sind vorliegend jeweils dreizehn Komfortröhren 250 verteilt. In Querrichtung liegt jedes der beiden Felder jeweils zwischen einem Polsterbefestigungskanal 254 in der Sitzmitte und jeweils einem an eine der beiden Seitenwangen 207 angrenzenden Polsterbefestigungskanal 254. Die Verteilung und die Gestalt der Komfortröhren 250 in den beiden Feldern ist spiegelsymmetrisch zueinander.

Die Komfortröhren 250 sind einstückig mit der ersten Schaumlage 211 verbunden und bilden die dem Sitzinsassen am nächsten zugewandten Abschnitte des Mittelbereichs 206 des Schaumteils 205. Die Komfortröhren 250 sind im Wesentlichen senkrecht zur Sitzfläche angeordnet. Die Querschnitte der Komfortröhren 250 sind vorliegend rechteckig mit abgerundeten Kanten, können jedoch auch jede andere geometrische Form aufweisen.

Für einen guten Klimakomfort ist in einigen der Komfortröhren 250 jeweils ein Loch 255 vorgesehen, das sich vollständig durch das Schaumteil 205 hindurch erstreckt. Einzelne, vorliegend benachbart zu den Seitenwangen 207 angeordnete Komfortröhren 250, sind jedoch aus Vollmaterial gebildet und weisen somit kein Loch auf.

Zwischen den beiden Schaumlagen 211 und 221 befindet sich ein als Vlies 225 ausgebildetes Netzwerk, das eine Grenze zwischen den beiden Schaumlagen 211 und 221 darstellt. Die beiden Schaumlagen 211 und 221 sind jeweils stoffschlüssig und/oder formschlüssig mit dem Vlies 225 verbunden.

Das Vlies 225 ist vorzugsweise senkrecht zu den Löchern 255 ausgerichtet. Vorliegend ist das Vlies 225 flächig ohne Löcher ausgebildet, so dass das Vlies durch die Löcher 255 hindurch läuft. Das Vlies 225 kann jedoch auch im Bereich der Löcher 255 gelocht ausgebildet sein.

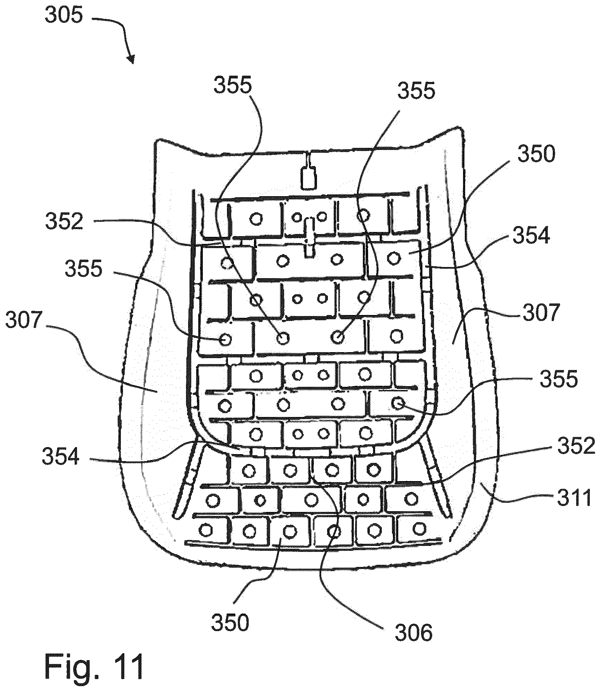

Ein in Figur 11 dargestelltes viertes Ausführungsbeispiel entspricht weitgehend dem ersten Ausführungsbeispiel, soweit es anschließend nicht abweichend beschrieben ist. Gleichwirkende Bauteile und Konturen haben gegenüber dem ersten Ausführungsbeispiel um den Wert 300 höhere Bezugszeichen. Ein Herstellverfahren und ein Werkzeug für das vierte Ausführungsbeispiel entsprechen ebenfalls jeweils weitgehend dem zuvor beschriebenen Herstellverfahren und Werkzeug.

Das vierte Ausführungsbeispiel ist ein Schaumteil 305 für ein Sitzkissen des Fahrzeugsitzes. Das Schaumteil 305 umfasst einen Mittelbereich 306 und zwei Seitenwangen 307.

Eine in Einbaulage des Fahrzeugsitzes annähernd horizontal angeordnete erste Schaumlage 311 ist im Falle der Benutzung des Fahrzeugsitzes dem Benutzer zugewandt. Die erste Schaumlage 311 besteht vorzugsweise aus Weichschaum.

In Einbaulage unterhalb der ersten Schaumlage 311 ist eine zweite in der Figur 11 nicht dargestellte Schaumlage angeordnet, insbesondere ebenfalls annähernd horizontal ausgerichtet und einteilig mit der ersten Schaumlage 311 verbunden. Die zweite Schaumlage besteht aus einem gegenüber dem Schaummaterial der ersten Schaumlage 311 festeren und/oder härteren Schaummaterial, vorzugsweise aus Hartschaum.

Die erste Schaumlage 311 weist zudem mehrere Komfortröhren 350 auf, welche einen weitgehend rechteckförmigen Querschnitt haben. Einzelne dieser Komfortröhren 350 haben einen annähernd quadratischen Querschnitt. Zwischen benachbarten Komfortröhren 350 liegen Vertiefungen 352 mit unterschiedlichen Tiefen.

Die Komfortröhren 350 sind in zwei Felder von unmittelbar benachbarten Komfortröhren 350 aufgeteilt. Die Grenzen der Felder sind weitgehend durch Polsterbefestigungskanäle 354 gebildet. Die Polsterbefestigungskanäle 354 bieten mehrere Durchgänge für an einem Sitzbezug befestigte erste Befestigungsmittel und mit diesen ersten Befestigungsmitteln zusammenwirkende und im Schaumteil 305 eingebrachte zweite Befestigungsmittel. Die an sich bekannten Befestigungsmittel, wie beispielsweise Drähte und Haken, sind in Figur 11 nicht dargestellt.

Die Komfortröhren 350 sind einstückig mit der ersten Schaumlage 311 verbunden und bilden die dem Sitzinsassen am nächsten zugewandten Abschnitte des Mittelbereichs 306 des Schaumteils 305. Die Komfortröhren 350 sind im Wesentlichen senkrecht zur Sitzfläche angeordnet. Die Querschnitte der Komfortröhren 350 sind vorliegend rechteckig mit abgerundeten Kanten, können jedoch auch jede andere geometrische Form aufweisen.

Für einen guten Klimakomfort sind in einigen der Komfortröhren 350 jeweils ein Loch 355 oder zwei Löcher 355 vorgesehen. Die Löcher 355 sind vorliegend kreiszylinderförmig ausgebildet und liegen vorzugsweise zentrisch in der zugehörigen Komfortröhre 350. Von einer kreiszylindrischen Form abweichende Querschnitte, beispielsweise Polygonquerschnitte oder elliptische Querschnitte, sind ebenfalls möglich. In der Mitte des Mittelbereichs 306 sind Komfortröhren 350 mit zwei versetzt zueinander positionierten, parallel verlaufenden Löchern 355 vorgesehen.

Einige der Löcher 355 erstrecken sich vollständig durch das Schaumteil 305 hindurch. Weitere Löcher 355 sind als Sacklöcher ausgebildet, so dass die Löcher 355 nicht vollständig durch das Schaumteil 305 hindurch verlaufen, sondern vorzugsweise nur durch die erste Schaumlage 311. Es ist auch denkbar, dass die als Sacklöcher ausgebildeten Löcher 355 nicht vollständig durch die erste Schaumlage 311 verlaufen oder bis in die zweite Schaumlage hinein verlaufen. Einzelne, vorliegend benachbart zu den Seitenwangen 307 angeordnete, Komfortröhren 350 sind aus Vollmaterial gebildet und weisen somit kein Loch auf.

Mittels einer Kombination von als Sacklöcher ausgebildeten Löchern 355 und durchgehenden Löchern 355 innerhalb eines Schaumteils 305 kann der Sitzkomfort und das Sitzklima gezielt beeinflusst werden.

In Abwandlung der vorstehenden Ausführungsbeispiele bestehen die Seitenwangen 7, 107, 207, 307 aus einem dritten Schaummaterial, dass gegenüber dem Schaummaterial der zweiten Schaumlage 21, 221 fester und/oder härter ist. Die Trennebene zwischen der ersten Schaumlage 311 und der zweiten Schaumlage verläuft dann nicht durch die Seitenwangen 7, 107, 207, 307.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange diese innerhalb des Schutzbereiches der nachstehenden Ansprüche liegen. Es lassen sich somit beispielsweise für das Sitzkissen als mögliche Varianten ein horizontaler Zweizonenschaum, ein horizontaler Zweizonenschaum mit Klimafunktion, ein horizontaler Zweizonenschaum mit Komfortröhren und ein horizontaler Zweizonenschaum mit Komfortröhren und Klimafunktion bilden. Sacklöcher können in Abwandlungen sämtlicher Ausführungsbeispiele eingesetzt werden.
Auch ein herkömmlicher Zweizonenschaum kann durch eine Klimafunktion und/oder die Komfortröhren in vorteilhafter Weise aufgewertet werden.

### Bezugszeichenliste

- 5, 105, 205, 305: Schaumteil
- 6, 106, 206, 306: Mittelbereich
- 7, 107, 207, 307: Seitenwange
- 11, 111, 211, 311: erste Schaumlage
- 21, 221: zweite Schaumlage
- 50, 150, 250, 350: Komfortröhre
- 52, 152, 252, 352: Vertiefung
- 55, 155, 255, 355: Loch
- 225: Vlies
- 254, 354: Polsterbefestigungskanal
- 500: Werkzeug
- 510: Unterteil
- 520: Rahmen
- 530: Oberteil

## Patentansprüche

1. Schaumteil (5, 105, 205, 305), insbesondere für einen Fahrzeugsitz, mit einer einem Benutzer zugewandten ersten Schaumlage (11, 111, 211, 311) und einer dem Benutzer abgewandten zweiten Schaumlage (21, 221), wobei die erste Schaumlage (11, 111, 211, 311) eine gegenüber der zweiten Schaumlage (21, 221) unterschiedliche Härte und/oder Dichte aufweist, **dadurch gekennzeichnet, dass** die erste Schaumlage (11, 111, 211, 311) mehrere dem Benutzer zugewandte Komfortröhren (50, 150, 250, 350) aufweist, wobei mindestens eine der Komfortröhren (50, 150, 250, 350) ein Loch (55, 155, 255, 355) aufweist.

2. Schaumteil (5, 105, 205, 305) nach Anspruch 1, **dadurch gekennzeichnet, dass** das Loch (55, 155, 255, 355) zylinderförmig in der mindestens einen der Komfortröhren (50, 150, 250, 350) verläuft.

3. Schaumteil (305) nach Anspruch 1 oder 2, **dadurch gekennzeichnet, dass** in mindestens einer der Komfortröhren (350) mehrere Löcher (355) vorgesehen sind.

4. Schaumteil (5, 105, 205, 305) nach einem der Ansprüche 1 bis 3, **dadurch gekennzeichnet, dass** mindestens eines der Löcher (55, 155, 255, 355) als Sackloch ausgebildet ist.

5. Schaumteil (5, 105, 205, 305) nach einem der Ansprüche 1 bis 4, **dadurch gekennzeichnet, dass** die erste Schaumlage (11, 111, 211, 311) von der zweiten Schaumlage (21, 221) durch ein Netzwerk (225) insbesondere aus Polyethylen, Jute, Gaze oder Vlies, getrennt ist.

6. Schaumteil (5, 105, 205, 305) nach Anspruch 5, **dadurch gekennzeichnet, dass** eine, insbesondere durch das Netzwerk (225) gebildete, Trennebene zwischen der ersten Schaumlage (11, 111, 211, 311) und der zweiten Schaumlage (21, 221) in einer annähernd horizontalen Ebene des Schaumteils liegt.

7. Schaumteil (5, 105, 205, 305) nach Anspruch 6, **dadurch gekennzeichnet, dass** die Trennebene (225) in einem Bereich der untersten Punkte von Vertiefungen (52, 152, 252, 352) zwischen mindestens zwei benachbarten Komfortröhren (50, 150, 250, 350) angeordnet ist.

8. Schaumteil (5, 105, 205, 305) nach Anspruch 6, **dadurch gekennzeichnet, dass** die Trennebene (225) in einem Bereich unterhalb der Vertiefungen (52, 152, 252, 352) zwischen mindestens zwei benachbarten Komfortröhren (50, 150, 250, 350) angeordnet ist.

9. Schaumteil (5, 105, 205, 305) nach Anspruch 6, **dadurch gekennzeichnet, dass** die Trennebene (225) in einem Bereich oberhalb der untersten Punkte der Vertiefungen (52, 152, 252, 352) zwischen mindestens zwei benachbarten Komfortröhren (50, 150, 250, 350) angeordnet ist.

10. Schaumteil (205, 305) nach einem der Ansprüche 1 bis 9, **dadurch gekennzeichnet, dass** die Komfortröhren (250) in mindestens zwei durch Polsterbefestigungskanäle (254, 354) voneinander getrennten Feldern angeordnet sind.

11. Schaumteil (205) nach Anspruch 10, **dadurch gekennzeichnet, dass** die Felder zueinander spiegelbildlich sind.

12. Schaumteil (5, 105, 205, 305) nach einem der Ansprüche 1 bis 11, **dadurch gekennzeichnet, dass** das Schaumteil (5, 105, 205, 305) eine dritte Schaumlage aufweist, die eine gegenüber der Härte und/oder Dichte der beiden anderen Schaumlagen (11, 111, 211, 311, 21, 221) größere Härte und/oder Dichte aufweist, insbesondere im Bereich einer Seitenwange (7, 107, 207, 307) des Schaumteils (5, 105, 205, 305).

## Claims

1. Foam part (5, 105, 205, 305), in particular for a vehicle seat, having a first foam tier (11, 111, 211, 311) which faces a user, and a second foam tier (21, 221) which faces away from the user, wherein the first foam tier (11, 111, 211, 311) has a hardness and/or density which is different from the second foam tier (21, 221), **characterized in that** the first foam tier (11, 111, 211, 311) has a plurality of comfort tubes (50, 150, 250, 350) which face the user, wherein at least one of the comfort tubes (50, 150, 250, 350) has a hole (55, 155, 255, 355).

2. Foam part (5, 105, 205, 305) according to Claim 1, **characterized in that** the hole (55, 155, 255, 355) runs in a cylindrical manner in the at least one of the comfort tubes (50, 150, 250, 350).

3. Foam part (305) according to Claim 1 or 2, **characterized in that** a plurality of holes (355) are provided in at least one of the comfort tubes (350) .

4. Foam part (5, 105, 205, 305) according to one of Claims 1 to 3, **characterized in that** at least one of the holes (55, 155, 255, 355) is configured as a blind hole.

5. Foam part (5, 105, 205, 305) according to one of Claims 1 to 4, **characterized in that** the first foam tier (11, 111, 211, 311) is separated from the second foam tier (21, 221) by a meshwork (225), in particular of polyethylene, jute, gauze, or non-woven material.

6. Foam part (5, 105, 205, 305) according to Claim 5, **characterized in that** a separation plane which is formed, in particular, by the meshwork (225) lies between the first foam tier (11, 111, 211, 311) and the second foam tier (21, 221) in an almost horizontal plane of the foam part.

7. Foam part (5, 105, 205, 305) according to Claim 6, **characterized in that** the separation plane (225) is disposed in a region of the lowermost points of depressions (52, 152, 252, 352) between at least two adjacent comfort tubes (50, 150, 250, 350).

8. Foam part (5, 105, 205, 305) according to Claim 6, **characterized in that** the separation plane (225) is disposed in a region below the depressions (52, 152, 252, 352) between at least two adjacent comfort tubes (50, 150, 250, 350).

9. Foam part (5, 105, 205, 305) according to Claim 6, **characterized in that** the separation plane (225) is disposed in a region above the lowermost points of the depressions (52, 152, 252, 352) between at least two adjacent comfort tubes (50, 150, 250, 350) .

10. Foam part (205, 305) according to one of Claims 1 to 9, **characterized in that** the comfort tubes (250) are disposed in at least two fields which are separated from one another by upholstery fastening ducts (254, 354).

11. Foam part (205) according to Claim 10, **characterized in that** the fields are mirror images of one another.

12. Foam part (5, 105, 205, 305) according to one of Claims 1 to 11, **characterized in that** the foam part (5, 105, 205, 305) has a third foam tier which has a greater hardness and/or density than the hardness and/or density of the other two foam tiers (11, 111, 211, 311, 21, 221), in particular in the region of a side panel (7, 107, 207, 307) of the foam part (5, 105, 205, 305).

## Revendications

1. Pièce en mousse (5, 105, 205, 305), en particulier pour un siège de véhicule, comprenant une première couche de mousse (11, 111, 211, 311) tournée vers un utilisateur et une deuxième couche de mousse (21, 221) détournée de l'utilisateur, la première couche de mousse (11, 111, 211, 311) présentant, par rapport à la deuxième couche de mousse (21, 221), une dureté et/ou une densité différentes, **caractérisée en ce que** la première couche de mousse (11, 111, 211, 311) présente plusieurs tubes de confort (50, 150, 250, 350) tournés vers l'utilisateur, au moins l'un des tubes de confort (50, 150, 250, 350) présentant un trou (55, 155, 255, 355).

2. Pièce en mousse (5, 105, 205, 305) selon la revendication 1, **caractérisée en ce que** le trou (55, 155, 255, 355) s'étend sous forme cylindrique dans l'au moins un des tubes de confort (50, 150, 250, 350).

3. Pièce en mousse (305) selon la revendication 1 ou 2, **caractérisée en ce que** plusieurs trous (355) sont prévus dans au moins l'un des tubes de confort (350).

4. Pièce en mousse (5, 105, 205, 305) selon l'une quelconque des revendications 1 à 3, **caractérisée en ce qu'**au moins l'un des trous (55, 155, 255, 355) est réalisé sous forme de trou borgne.

5. Pièce en mousse (5, 105, 205, 305) selon l'une quelconque des revendications 1 à 4, **caractérisée en ce que** la première couche de mousse (11, 111, 211, 311) est séparée de la deuxième couche de mousse (21, 221) par un réseau (225), en particulier constitué de polyéthylène, de jute, de gaze ou de non-tissé.

6. Pièce en mousse (5, 105, 205, 305) selon la revendication 5, **caractérisée en ce qu'**un plan de séparation, formé en particulier par le réseau (225), est situé entre la première couche de mousse (11, 111, 211, 311) et la deuxième couche de mousse (21, 221) dans un plan approximativement horizontal de la pièce en mousse.

7. Pièce en mousse (5, 105, 205, 305) selon la revendication 6, **caractérisée en ce que** le plan de séparation (225) est disposé dans une région du point le plus bas de renfoncements (52, 152, 252, 352) entre au moins deux tubes de confort (50, 150, 250, 350) adjacents.

8. Pièce en mousse (5, 105, 205, 305) selon la revendication 6, **caractérisée en ce que** le plan de séparation (225) est disposé dans une région en dessous des renfoncements (52, 152, 252, 352) entre au moins deux tubes de confort (50, 150, 250, 350) adjacents.

9. Pièce en mousse (5, 105, 205, 305) selon la revendication 6, **caractérisée en ce que** le plan de séparation (225) est disposé dans une région au-dessus du point le plus bas des renfoncements (52, 152, 252, 352) entre au moins deux tubes de confort (50, 150, 250, 350) adjacents.

10. Pièce en mousse (205, 305) selon l'une quelconque des revendications 1 à 9, **caractérisée en ce que** les tubes de confort (250) sont disposés dans au moins deux champs séparés l'un de l'autre par des canaux de fixation de rembourrage (254, 354).

11. Pièce en mousse (205) selon la revendication 10, **caractérisée en ce que** les champs présentent une symétrie spéculaire l'un par rapport à l'autre.

12. Pièce en mousse (5, 105, 205, 305) selon l'une quelconque des revendications 1 à 11, **caractérisée en ce que** la pièce en mousse (5, 105, 205, 305) présente une troisième couche de mousse qui présente une plus grande dureté et/ou densité par rapport à la dureté et/ou la densité des deux autres couches de mousse (11, 111, 211, 311, 21, 221), en particulier dans la région d'une joue latérale (7, 107, 207, 307) de la pièce en mousse (5, 105, 205, 305).
